# DEMANDE DE BREVET EUROPEEN

(11) **EP 0 756 389 A1**
(43) Date de publication de la demande: **29.01.1997**
(21) Numéro de dépôt: 96410078.8
(22) Date de dépôt: 09.07.1996
(51) Int. Cl.: H04B 3/54

(54) **Circuit d'affectation d'un canal de transmission sur le réseau électrique**

(30) Priorité: 13.07.1995 FR 9508761
(71) Demandeur: SGS-THOMSON MICROELECTRONICS S.A., 94250 Gentilly (FR)
(72) Inventeur: Huloux, Joel, 38420 Le Versoud (FR)
(74) Mandataire: de Beaumont, Michel

(57) **Abrégé**

L'invention concerne un circuit (1) d'affectation d'un canal à une transmission entre au moins deux modems utilisant le réseau électrique comme support de transmission d'un flux de données binaires (TxD), comportant, côté réception, un dispositif (11) de sélection d'un canal choisi pour son meilleur niveau de transmission en fonction de l'énergie reçue sur plusieurs canaux de transmission, la transmission s'effectuant, au moins au début de chaque communication, sur plusieurs canaux.

## Description

La présente invention concerne le domaine des modulateurs/démodulateurs (modems) numériques utilisant le réseau électrique comme support de transmission. L'invention s'applique plus particulièrement à l'affectation d'un canal à une transmission entre au moins deux modems raccordés sur un même réseau.

Les modems utilisant le réseau électrique comme support de transmission sont notamment utilisés pour des applications de domotique. Dans de telles applications, différents appareils électriques (chauffage, éclairage, alarme, etc.) raccordés au réseau sont associés à des modems et sont ainsi susceptibles d'être commandés par une centrale de commande selon un scénario temporel et/ou faisant intervenir des capteurs (température, incendie, inondation, effraction, etc.). La centrale est généralement associée à un système de réception d'instructions transmises par le réseau téléphonique pour permettre une commande ou une programmation de scénarios à distance de l'installation domotique.

Dans une telle installation, le réseau électrique à 50 ou 60 Hz constitue le support de transmission. On utilise généralement une modulation par saut de fréquence (couramment appelée modulation FSK d'après l'expression anglo-saxonne Frequency Shift Keying). Les données à transmettre sont codées sous forme binaire puis converties en signal analogique, par exemple, sous forme d'échantillons de portions de l'une ou l'autre de deux fréquences fₐ et f_{b} qui constituent le signal à transmettre sur le réseau. L'amplitude de la modulation est faible (de l'ordre du volt) devant la tension du réseau électrique afin de ne pas nuire à l'alimentation des différents appareils.

On peut également rencontrer des installations utilisant une modulation par saut d'amplitude (couramment appelée modulation ASK d'après l'expression anglo-saxonne Amplitude Shift Keying). Les données binaires sont ici converties en un signal analogique, sous forme d'échantillons de portions d'une fréquence qui constitue le signal à transmettre sur le réseau.

Un problème que l'on rencontre dans ce type de transmission est lié à l'utilisation du réseau électrique comme support de transmission. En effet, le signal reçu par un modem donné est susceptible d'être fortement atténué en raison du support de transmission utilisé. Cette atténuation qui est variable et incontrôlable a essentiellement deux causes.

En premier lieu, l'impédance du réseau aux fréquences utilisées pour la modulation varie en fonction des charges qu'il alimente. Cette variation d'impédance qui est essentiellement inductive et, par exemple, comprise entre 1,5 et 80 Ω à la fréquence de 100 kHz est incontrôlable car elle dépend des charges alimentées dans l'installation concernée et de l'impédance du transformateur de distribution d'électricité sur lequel l'installation est raccordée. De plus, l'impédance du réseau dépend des charges alimentées dans toutes les installations qu'il alimente. L'atténuation due à ces variations d'impédance est, par exemple, comprise entre environ 2 et 40 dB pour une charge typiquement résistive.

En second lieu, les connexions électriques atténuent le signal. L'atténuation est plus importante si le signal émis par un modem donné est destiné à un modem raccordé à une autre branche du circuit électrique. En d'autres termes, la traversée du tableau de répartition et des fusibles ou disjoncteurs qu'il comporte entraîne une atténuation importante du signal (de l'ordre de 20 à 30 dB).

La présente invention vise à pallier ces inconvénients en proposant un circuit qui permette d'utiliser plusieurs canaux de transmissions et de sélectionner automatiquement le meilleur canal de transmission.

L'invention vise également à proposer un circuit d'affectation qui n'entraîne pas de modification de structure des modems existants.

L'invention vise également à ce que des circuits d'affectations disposant d'un nombre différent de canaux soient compatibles entre eux sans aucune intervention.

L'invention vise en outre à rendre les canaux de transmission programmables par l'utilisateur.

Pour atteindre ces objets, la présente invention prévoit un circuit d'affectation d'un canal à une transmission entre au moins deux modems utilisant le réseau électrique comme support de transmission d'un flux de données binaires, comportant, côté réception, un dispositif de sélection d'un canal choisi pour son meilleur niveau de transmission en fonction de l'énergie reçue sur plusieurs canaux de transmission, la transmission s'effectuant, au moins au début de chaque communication, sur plusieurs canaux.

Selon un mode de réalisation de la présente invention, le circuit comporte, côté émission, un dispositif destiné à moduler un signal à émettre sur au moins une fréquence choisie parmi plusieurs fréquences élevées définissant les canaux de transmission.

Selon un mode de réalisation de la présente invention, ledit dispositif de sélection délivre un signal de configuration d'un dispositif de démodulation d'un signal reçu sur ledit canal choisi.

Selon un mode de réalisation de la présente invention, ledit dispositif de sélection délivre toutes lesdites fréquences de modulation audit dispositif de modulation tandis qu'il délivre une seule de ces fréquences, associée au canal sélectionné pour la communication, audit dispositif de démodulation, cette fréquence unique constituant ledit signal de configuration du dispositif de démodulation.

Selon un mode de réalisation de la présente invention, ledit dispositif de modulation comporte au moins deux multiplieurs du flux de données par chacune desdites fréquences élevées délivrées par ledit dispositif de sélection et un mélangeur des signaux de sorties desdits multiplieurs.

Selon un mode de réalisation de la présente invention, ledit dispositif de démodulation comporte un multiplieur recevant, en entrées, un signal sortant du réseau après filtrage et ladite fréquence élevée associée au canal sélectionné et délivrée par ledit dispositif de sélection.

Selon un mode de réalisation de la présente invention, ledit dispositif de modulation est associé à un commutateur recevant, en entrées, les différentes fréquences de modulation, ledit commutateur étant commandé en fonction du canal sélectionné par ledit dispositif de sélection.

Selon un mode de réalisation de la présente invention, ledit dispositif de sélection délivre, en outre, un signal indicateur du canal sélectionné à un processeur de commande du modem, ledit processeur envoyant au circuit d'affectation, un signal de commande permettant de forcer les fréquences de modulation et de démodulation.

Selon un mode de réalisation de la présente invention, la sélection du canal de transmission s'effectue, côté réception, durant une trame d'établissement d'une communication envoyée, sur tous les canaux, par un modem émetteur.

Selon un mode de réalisation de la présente invention, ledit signal à émettre est un flux de données binaires converti en un signal modulé sous la forme d'échantillons de portions de deux fréquences centrées sur une fréquence centrale initiale par un modulateur par saut de fréquence, la modulation effectuée par ledit dispositif de modulation consistant en un décalage de ladite fréquence centrale initiale vers au moins une fréquence plus élevée en respectant l'écart entre les deux fréquences de la modulation FSK.

Selon un mode de réalisation de la présente invention, la sortie dudit multiplieur du dispositif de démodulation est envoyée sur un filtre passe-bande dont la largeur de bande correspond audit écart entre les fréquences de la modulation FSK et qui est centré sur ladite fréquence initiale, la sortie dudit filtre passe-bande étant envoyée sur un démodulateur FSK chargé de restituer un flux de données binaires.

Selon un mode de réalisation de la présente invention, ledit signal à émettre est un flux de données binaires converti en un signal modulé sous la forme d'échantillons de portions d'une fréquence par un modulateur par saut d'amplitude, la modulation effectuée par ledit dispositif de modulation consistant en un décalage de ladite fréquence dudit modulateur ASK vers au moins une fréquence plus élevée.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 représente, sous forme de schéma-blocs, un premier mode de réalisation d'un circuit d'affectation d'un canal de transmission à une transmission de données modulées par saut de fréquence selon l'invention ;
la figure 2 représente, sous forme de schéma-blocs, un deuxième mode de réalisation d'un circuit d'affectation d'un canal de transmission à une transmission de données modulées par saut de fréquence selon l'invention ;
la figure 3 représente la forme d'une trame d'établissement d'une communication selon le deuxième mode de réalisation de l'invention réprésenté à la figure 2 ;
la figure 4 représente un mode de réalisation d'un dispositif de sélection du canal de transmission selon le deuxième mode de réalisation de l'invention représenté à la figure 2 ;
la figure 5 représente un mode de réalisation d'un dispositif de modulation d'un circuit d'affectation selon le deuxième mode de réalisation représenté à la figure 2 ; et
la figure 6 représente un mode de réalisation d'un dispositif de démodulation d'un circuit d'affectation selon les deux premiers modes de réalisation représentés aux figures 1 et 2.

Pour des raisons de clarté, seuls les éléments utiles à la compréhension de l'invention ont été représentés aux figures. De plus, les mêmes éléments ont été désignés aux différentes figures par les mêmes références.

Une caractéristique de la présente invention est d'effectuer une modulation du signal à transmettre sur plusieurs fréquences f'ᵢ définissant chacune, un canal de transmission. Ainsi, il est possible de sélectionner, en fonction de l'impédance du réseau entre deux modems souhaitant communiquer, celles des fréquences de transmission qui est la moins atténuée.

Si la transmission doit s'opérer en modulation FSK, le circuit selon l'invention effectue une surmodulation, sur au moins une fréquence f'ᵢ, d'un flux de données Tx déjà modulé par saut de fréquence (FSK). Cette surmodulation décale la fréquence centrale f_{c} des deux fréquences fₐ et f_{b} de la modulation FSK vers au moins une fréquence fᵢ plus élevée en respectant l'écart Δf = f_{b} - fₐ de la modulation FSK.

Dans le cas d'une modulation par saut d'amplitude (ASK), un flux de données binaires peut être directement modulé sur au moins une fréquence f'ᵢ par le circuit d'affectation selon l'invention. Si le circuit selon l'invention est associé à un modem existant, il effectue une surmodulation, sur au moins une fréquence f'ᵢ, d'un signal déjà modulé par saut d'amplitude. Cette surmodulation décale la porteuse f_{c} de la modulation ASK vers au moins une fréquence fᵢ plus élevée.

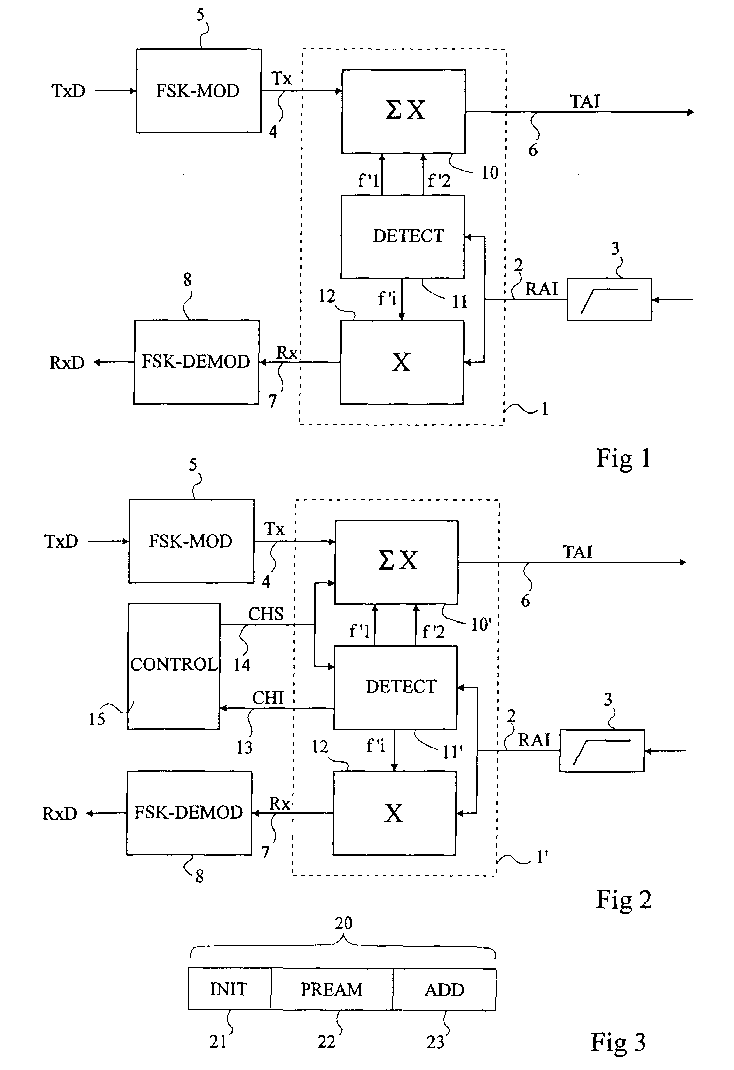

La figure 1 représente un premier mode de réalisation d'un circuit d'affectation d'un canal de transmission à une transmission de données modulées par saut de fréquence.

Le circuit d'affectation 1, selon l'invention, est intercalé entre un réseau électrique constituant un support de transmission par courant porteur et le modulateur/démodulateur proprement dit.

Une première borne d'entrée 2 du circuit 1 reçoit un signal RAI extrait du réseau au moyen d'une interface 3 chargée d'éliminer la composante haute-tension et basse-fréquence qui correspond à la porteuse fournie par l'alimentation électrique.

Une deuxième borne d'entrée 4 du circuit 1 reçoit un signal à transmettre Tx. Dans l'exemple représenté, ce signal Tx est un signal modulé par saut de fréquence par un modulateur FSK_MOD 5. La modulation effectuée, selon l'invention, par le circuit 1 s'applique à ce signal Tx pour délivrer, sur une première borne de sortie 6 du circuit 1, un signal TAI vers le réseau électrique.

Une deuxième borne de sortie 7 du circuit 1 délivre un flux de données reçues Rx à partir du signal reçu RAI. Si le signal RAI est un signal modulé en FSK, le signal Rx est encore modulé par saut de fréquence et est envoyé à un démodulateur FSK_DEMOD 8.

Le circuit 1 comporte un dispositif de modulation 10, sur au moins une fréquence élevée f'ᵢ définissant un canal de transmission, du signal Tx à émettre. Si, comme cela est représenté, l'entrée 4 du circuit 1 est reliée à la sortie d'un modulateur FSK 5, le signal Tx est déjà un signal en modulation FSK. Le dispositif 10 décale alors la fréquence centrale f_{c} de la modulation FSK vers au moins une fréquence élevée fᵢ en respectant l'écart Δf entre les deux fréquences fₐ et f_{b} de la modulation FSK.

Le circuit 1 comporte également un dispositif 11 de sélection d'un canal de transmission parmi plusieurs fréquences de modulation f'ᵢ qu'il génère. Le circuit 1 comprend, en outre, un dispositif de démodulation 12 chargé de reconstituer un signal Rx de même nature que le signal Tx. Si le signal Tx est un signal en modulation FSK, le dispositif 12 décale une des fréquences centrales élevées fᵢ du signal RAI vers la fréquence centrale f_{c} de la modulation FSK. Si le signal Tx est un signal modulé par saut d'amplitude ASK, le dispositif 12 décale la fréquence élevée fᵢ du signal RAI vers la porteuse de la modulation ASK d'origine. Si, par contre, le signal Tx est un flux de données binaires, le dispositif 12 restitue directement ce flux de données binaires.

Le circuit 1 délivre une seule fréquence élevée f'ᵢ correspondant au canal de transmission sélectionné au dispositif de démodulation 12. Par contre, il délivre au dispositif de surmodulation 10, toutes les fréquences f'₁ qu'il génère, ici deux f'₁ et f'₂, pour permettre une émission sur tous les canaux de transmission.

Une caractéristique de la présente invention est que l'affectation d'un canal de transmission entre deux modems, respectivement émetteur et récepteur d'une transmission, est effectuée, par le modem récepteur, en fonction de l'atténuation subie par différents canaux portant le même flux de données Rx sur le signal TAI émis par le modem émetteur.

Selon le premier mode de réalisation représenté à la figure 1, le signal TAI émis par un modem est constitué de plusieurs flux de données identiques en modulation FSK présentant des fréquences centrales f₁ et f₂ différentes.

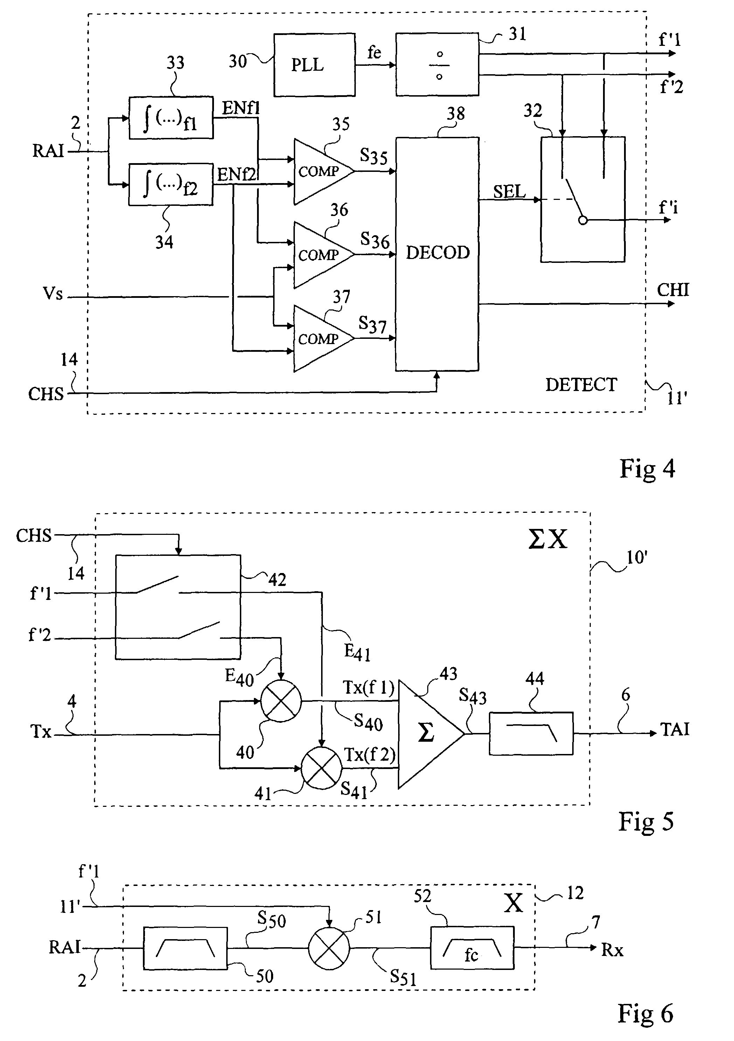

Lorsque qu'un modem émetteur souhaite émettre un flux de données binaires TxD, ce flux est modulé par saut de fréquence par son modulateur FSK 5. Le signal Tx est surmodulé, au sein du dispositif 10, en étant multiplié par les différentes fréquences élevées f'₁ et f'₂ délivrées par le dispositif 11. Les résultats de ces multiplications sont sommés, ou mélangés, comme on le verra par la suite en relation avec la figure 5, pour constituer le signal TAI. Le signal TAI comprend donc deux flux de données identiques dont les fréquences centrales f₁ et f₂ sont différentes. On veillera à ce que les écarts entre les fréquences élevées f'₁ et f'₂ générées par le circuit 11 soient supérieurs à l'écart Δf entre les deux fréquences fₐ et f_{b} de la modulation FSK.

Le signal RAI reçu par un modem récepteur comporte donc tous ces flux de données identiques. Mais, en fonction des fréquences fᵢ auxquelles sont transmis ces différents flux, ils sont plus ou moins atténués selon l'impédance du réseau entre les deux modems.

Le dispositif 11 du modem récepteur sélectionne, parmi les fréquences fᵢ, celle qu'il reçoit le mieux. En d'autres termes, le dispositif 11 d'un modem récepteur sélectionne, parmi tous les canaux de transmission de l'installation, celui pour lequel le flux de données contenu dans le signal RAI qu'il reçoit est le moins atténué. Dès qu'il a sélectionné un canal de transmission (réception), il délivre au dispositif de démodulation 12, la fréquence f'ᵢ qui correspond à ce canal. Ainsi, le dispositif 12 est configuré sur le canal qu'il reçoit le mieux du modem émetteur. Il reconstitue alors le flux de données Rx de ce canal comme on le verra par la suite en relation avec la figure 6 et le transmet au démodulateur FSK 8.

Un avantage de la présente invention est qu'elle permet d'affecter à la communication le meilleur canal possible.

Un autre avantage de l'invention est que cette affectation s'effectue de manière automatique.

Selon le premier mode de réalisation, l'affectation du canal de transmission peut changer au cours de la communication. En effet, le dispositif 11 examine, en permanence, le niveau des différents canaux et configure, en conséquence le dispositif 12.

Un tel mode de réalisation est particulièrement adapté à des applications où les transmissions sont longues, c'est-à-dire dans les cas où l'impédance du réseau est susceptible de varier fréquemment au cours d'une même transmission.

Un avantage de la présente invention est qu'elle permet d'utiliser différents canaux de transmissions pour une même communication à destination de plusieurs modems en respectant la sélection du meilleur canal de transmission par les modems récepteur. En effet, comme le modem émetteur transmet tout le message sur tous les canaux, chaque modem récepteur peut affecter à cette transmission le canal qu'il reçoit le mieux.

La figure 2 représente un deuxième mode de réalisation d'un circuit 1' d'affectation d'un canal de transmission à une transmission de données modulées par saut de fréquence.

Selon ce deuxième mode de réalisation, un même canal de transmission est affecté à une communication donnée. Ce canal est toujours sélectionné automatiquement en fonction de l'atténuation subie par les différents canaux mais n'est pas modifié durant la communication.

La distinction par rapport au premier mode de réalisation réside essentiellement dans le fait que le dispositif de sélection 11' délivre, sur une troisième borne de sortie 13 et à l'attention d'un circuit numérique, ou processeur 15, de commande du modem, un signal CHI indicateur du canal sélectionné. De plus, le circuit 1' reçoit, sur une troisième borne d'entrée 14, un signal CHS délivré par le processeur 15 de commande et destiné à forcer l'affectation d'un canal de modulation. En d'autres termes, selon l'état du signal CHS, le dispositif 10' utilise, soit toutes les fréquences f'ᵢ générées par le dispositif 11' pour établir la communication, soit une seule de ces fréquences f'ᵢ lorsque la communication est établie. Pour ce faire, le dispositif 10' comporte, comme on le verra en relation avec la figure 6, des moyens, par exemple logiques, pour commuter les entrées de son mélangeur. Le signal CHS est également envoyé sur le dispositif 11' pour forcer la fréquence élevée f'ᵢ qu'il délivre au dispositif 12.

Lorsqu'il veut émettre un message, un modem émetteur commence, selon le deuxième mode de réalisation de l'invention, par émettre une trame d'établissement de communication sur le réseau. Le rôle de cette trame est de permettre au modem destinataire, d'affecter un canal à cette communication.

Lorsqu'aucune communication n'est présente sur le réseau, tous les modems de l'installation sont placés dans un mode de scrutation dans lequel ils surveillent l'apparition d'une transmission.

La figure 3 représente un exemple d'une trame 20 d'établissement d'une communication selon le deuxième mode de réalisation représenté à la figure 2.

Cette trame 20 est émise par un modem émetteur en étant surmodulée sur toutes les fréquences élevées f'ᵢ (ici, f'₁ et f'₂) qui sont délivrées, par son dispositif 11', à son dispositif 10'. Ainsi, le signal TAI émis lors d'une trame 20 d'établissement de communication est constitué de plusieurs flux de données identiques en modulation FSK présentant des fréquences centrales fᵢ différentes.

La trame 20 débute par une première séquence pseudo-aléatoire INIT 21. Cette séquence 21 est destinée à permettre aux dispositifs 11' des autres modems raccordés au réseau de sélectionner, dans leur signal RAI (correspondant au signal TAI émis par le modem émetteur), celle des fréquences fᵢ qu'il reçoit le mieux. En d'autres termes et comme pour le premier mode de réalisation, ces dispositifs 11' sélectionnent, parmi tous les canaux de transmission de l'installation, celui pour lequel le flux de données contenu dans le signal RAI est le moins atténué. Dès qu'ils ont sélectionné un canal de transmission, les dispositifs 11' délivrent aux dispositifs de démodulation 12 auxquels ils sont respectivement associés, la fréquence f'ᵢ qui correspond à ce canal. La durée de la séquence INIT 21 est fixée en fonction du temps nécessaire à cette sélection par les dispositifs 11' des modems de l'installation. Ainsi, à la fin de la séquence INIT 21, tous les dispositifs 12 des modems de l'installation sont configurés sur le canal qu'ils reçoivent le mieux du modem émetteur.

La séquence INIT 21 est suivie d'une deuxième séquence PREAM 22 contenant un code prédéterminé d'identification d'une trame d'établissement de communication. Cette séquence 22 sert aux modems qui la reçoivent à déterminer qu'ils sont en train de recevoir une trame 20.

La séquence PREAM 22 est suivie d'une troisième séquence ADD 23 contenant les adresses du modem émetteur et du modem récepteur auquel est destiné le message que le modem émetteur s'apprête à envoyer. Le modem émetteur est commuté dans un mode de réception, ou scrutation, dès qu'il a fini d'émettre la trame 20.

les séquences PREAM 22 et ADD 23 sont interprétées par le processeur 15 de commande du modem qui est chargé, entre autres, d'exploiter les informations contenues dans le flux de données RxD.

Si un modem de l'installation reconnaît son adresse dans la séquence ADD 23, son processeur 15 le commute dans un mode d'émission pour qu'il indique au modem émetteur, le canal de transmission qu'il souhaite affecter à la communication.

Cette indication s'effectue, par le modem récepteur, en émettant lui-même une trame 20 d'établissement de communication. Cependant, cette trame est surmodulée uniquement sur la fréquence élevée f'ᵢ qui a été sélectionnée par son dispositif 11'. Pour ce faire, le processeur 15 utilise l'indication du canal sélectionné qui lui est fournie par le signal CHI délivré par le dispositif 11' auquel il est associé. Il indique alors au dispositif 10', au moyen du signal CHS, ce canal sélectionné.

Dans la séquence ADD 23 de sa trame 20, le modem récepteur indique sa propre adresse ainsi que l'adresse du modem émetteur auquel est destinée la trame 20.

Ainsi, le modem émetteur ne reçoit une trame 20 que sur une fréquence centrale fᵢ (ici, f₁ ou f₂). Son dispositif 11' va donc sélectionner le canal associé à cette fréquence dans la mesure où le niveau des autres canaux est nul. Son dispositif 12 est donc configuré sur le canal utilisé pour la réponse du modem récepteur. Comme pour le modem récepteur, le processeur 15 du modem émetteur force son circuit 1', au moyen du signal CHS, pour qu'il émette désormais uniquement sur le canal sélectionné.

Ce canal est désormais affecté à la communication entre les deux modems. Le modem émetteur peut alors envoyer son message de manière classique.

Lorsqu'un modem émetteur souhaite émettre un même message à destination de plusieurs modems récepteurs, on prévoit, de préférence, que les modems récepteurs soient dispensés d'émettre une trame 20 en réponse afin d'éviter que deux modems émettent, en même temps, une trame 20 de réponse à destination d'un même modem émetteur. La trame 20 envoyée par le modem émetteur comporte alors un code permettant aux modems récepteurs d'identifier que le modem émetteur cherche à établir une transmission vers un groupe de modems. Le modem émetteur envoie son message sur tous les canaux.

On notera donc que le deuxième mode de réalisation peut reproduire le fonctionnement du premier mode de réalisation. Il suffit, pour cela, de maintenir le signal CHS dans l'état qui correspond à l'établissement d'une communication. Le dispositif 10' du modem émetteur utilise alors, en permanence, toutes les fréquences f'ᵢ.

On peut également prévoir que tous les modems récepteurs envoient une trame 20 de réponse au modem émetteur. Pour ce faire, on prévoit, par exemple, que lorsqu'un modem reçoit une trame 20 qui lui est destinée et qui comporte un code de transmission groupée, il retarde son basculement vers le mode d'émission d'un temps prédéterminé qui lui est propre. Il reste ainsi en mode de scrutation pendant ce temps et ne peut donc envoyer sa trame 20 de réponse si un autre modem est en train d'en envoyer une. Le rôle du retard affecté, dans ce cas, à chaque modem, est d'éviter que deux modems récepteurs basculent en même temps en mode d'émission. Le modem émetteur va donc recevoir autant de trame 20 qu'il y a de modems destinataires de la transmission. Chaque trame 20 lui indique un canal de transmission ce qui lui permet de configurer son dispositif de surmodulation sur les canaux choisis par les modems récepteurs. Plusieurs modems récepteurs peuvent, bien entendu, avoir sélectionné un même canal.

Selon une variante de réalisation, l'affectation du canal est effectuée sans intervention du processeur 15 du modem. Le dispositif 11', une fois qu'il a sélectionné le meilleur canal qu'il reçoit, peut en effet être en mesure de délivrer, de lui-même, une seule des fréquences f'ᵢ au dispositif 10', comme il le fait pour le dispositif 12.

Cependant, on préférera pouvoir forcer, au moyen du processeur 15, le canal de transmission. Cela présente l'avantage, selon l'invention, de permettre une configuration personnalisée des différents circuits 1'.

Par exemple, cela permet de faire transiter plusieurs communications différentes sur un même réseau sur lequel sont raccordés plusieurs groupes de modems. En effet, on peut utiliser les signaux CHS pour configurer les modems de l'installation par groupes de modems utilisant des canaux différents. Pour conserver une possibilité d'affectation d'un canal de transmission en fonction du niveau de réception, il faut alors disposer de plus de canaux que de groupes de modems. Les modems d'un même groupe sont tous configurés, au moyen du signal CHS, pour que leur dispositif 11' délivre, au dispositif 12, uniquement les fréquences f'ᵢ qui correspondent aux canaux choisis pour ce groupe, et pour que le dispositif 10' n'utilise que ces fréquences f'ᵢ.

Une telle répartition, par groupe, est particulièrement intéressante lorsque les modems de l'installation peuvent être répartis par groupes où les modems d'un même groupe n'ont pas besoin de communiquer avec des modems d'un autre groupe.

On notera que les signaux CHI et CHS sont, de préférence, des signaux sur plusieurs bits si les circuits 1' disposent de plus de deux canaux. Le nombre de bits est, par exemple, égal au nombre de canaux.

La figure 4 représente un mode de réalisation d'un dispositif de sélection 11' d'un circuit d'affectation 1' tel que représenté à la figure 2.

Comme il a été dit plus haut, ce dispositif 11' génère les fréquences élevées f'ᵢ (dans l'exemple représenté, f'₁ et f'₂) pour le dispositif 10' et sélectionne le meilleur canal pour délivrer, au dispositif 12, la fréquence élevée f'₁ ou f'₂ correspondante.

Le dispositif 11' comporte une boucle à verrouillage de phase PLL 30 qui délivre une fréquence d'entrée fₑ d'un diviseur de fréquence 31. Le diviseur de fréquence 31 est, de préférence, un diviseur numérique et est dimensionné pour délivrer autant de fréquences f'ᵢ que le nombre de canaux prévus pour le circuit 1'. La fréquence fₑ délivrée par la PLL 30 est choisie pour être un multiple de chacune des fréquences f'ᵢ que l'on souhaite obtenir. Les fréquences f'₁ et f'₂ sont délivrées au dispositif 10' ainsi qu'à un commutateur 32 chargé de sélectionner, en fonction d'une consigne SEL qu'il reçoit, celle des fréquences f'₁ ou f'₂ qui est délivrée au dispositif 12.

Le signal RAI reçu par le circuit 1' est envoyé sur un nombre d'intégrateurs (ici deux) 33 et 34 égal au nombre de canaux du circuit 1'. Ces intégrateurs 33 et 34 délivrent les niveaux d'énergie EN_{f1} et EN_{f2} des flux de données respectifs présents sur chacun des canaux. Ces niveaux d'énergie EN_{f1} et EN_{f2} sont envoyés sur deux entrées d'un premier comparateur COMP 35. Le signal de sortie S₃₅ de ce comparateur 35 permet d'identifier celui des canaux qui est reçu avec un niveau d'énergie le plus élevé.

De préférence, les niveaux d'énergie EN_{f1} et EN_{f2} sont également envoyés vers des comparateurs secondaires COMP, respectivement 36 et 37, dont le rôle est de comparer chaque niveau EN_{f1} et EN_{f2} par rapport à une valeur seuil Vs. Cela permet d'empêcher l'établissement d'une communication si tous les canaux sont reçus avec un niveau trop faible.

On notera que plus le nombre de fréquences f'ᵢ générées par le dispositif 11' est élevé, moins il y a de risque qu'une communication ne puisse pas s'établir.

Les sorties S₃₅, S₃₆ et S₃₇ des comparateurs 35, 36 et 37 sont envoyées à un circuit logique DECOD 38 recevant également le signal CHS. Le rôle du circuit 38 est de délivrer, en fonction des états respectifs des différents signaux S₃₅, S₃₆, S₃₇ et CHS, le signal SEL de commande du commutateur 32. La réalisation pratique du circuit logique 38 est à la portée de l'homme du métier en fonction des indications fonctionnelles données dans la présente description.

Si les deux signaux S₃₆ ou S₃₇ sont dans un état indiquant qu'aucun canal n'est reçu avec un niveau suffisant, la trame 20 reçue ne peut être démodulée car aucune fréquence f'ᵢ n'est délivrée au dispositif 12 du modem récepteur. Ainsi, ce modem n'émet pas de trame 20 en retour. Comme le modem émetteur attend cette trame 20 pour commencer à envoyer son message, il sait, au bout d'un temps prédéterminé, qu'aucun canal ne peut transmettre correctement le message vers le modem récepteur.

Un avantage de la présente invention est qu'elle permet d'indiquer rapidement (environ le temps de deux trames 20) à un modem émetteur, s'il va pouvoir émettre un message à destination d'un modem donné qui le recevra correctement. Ainsi, un modem qui doit émettre plusieurs messages différents à l'attention de différents modems (par exemple, la centrale d'une installation domotique) peut ne pas perdre de temps à émettre un message qui ne sera pas reçu correctement et qu'il devrait donc, dans les circuits classiques, réémettre. Il peut alors essayer d'émettre un autre message vers un autre modem et réessayer ultérieurement d'émettre à l'attention du premier modem.

La constitution du dispositif de sélection 11' exposée ci-dessus se transpose à celle d'un dispositif 11 selon le premier mode de réalisation du circuit d'affectation 1 exposé en relation avec la figure 1. Il suffit de supprimer les signaux CHS et CHI et de modifier le circuit 38 pour qu'il ne tienne pas compte de ces signaux.

Les intégrateurs 33 et 34 sont réalisés de manière classique. On veillera simplement à ce que le filtre d'entrée que comporte chaque intégrateur 33 et 34 soit un filtre passe-bande dont la largeur de bande correspond sensiblement à l'écart Δf entre les deux fréquences fₐ et f_{b} de la modulation FSK en étant centrée sur la fréquence f₁ ou f₂ à laquelle l'intégrateur est associé.

On notera que le dispositif 11' décrit ci-dessus peut être rigoureusement identique si le signal Tx est un signal en modulation ASK. Il suffit pour cela que la fréquence de la porteuse du signal Rx soit comprise entre les fréquences fₐ et f_{b} de la modulation FSK pour lesquelles est prévu le dispositif 11'. En effet, les fréquences f₁ et f₂ des canaux de transmissions seront alors comprises dans les bandes passantes des intégrateurs 33 et 34.

Si le signal Tx est directement le flux de données binaires, les intégrateurs sont dimensionnés pour calculer les niveaux d'énergie reçus au voisinage des fréquences, respectivement f'₁ et f'₂.

La figure 5 représente un mode de réalisation d'un dispositif de modulation 10' d'un circuit d'affectation 1' tel que représenté à la figure 2.

Le dispositif 10' comporte deux multiplieurs 40 et 41 recevant, sur une première entrée, le signal Tx. Une seconde entrée E₄₀ et E₄₁ de chaque multiplieur reçoit une des fréquences f'₁ ou f'₂ générées par le dispositif 11'. Ces fréquences f'₁ et f'₂ sont délivrées aux entrées E₄₀ et E₄₁, par l'intermédiaire d'un circuit de commutation 42. Le circuit 42 est commandé par le signal CHS.

Les sorties S₄₀ et S₄₁ des multiplieurs 40 et 41 délivrent le flux de données modulé en FSK Tx centré, respectivement, sur les fréquences f₁ ou f₂. Les nouvelles fréquences centrales f₁ et f₂ des flux de données modulés par saut de fréquence correspondent à la fréquence centrale f_{c} du modulateur FSK 5 multipliée par les fréquences, respectivement f'₁ et f'₂. Les sorties S₄₀ et S₄₁ sont envoyées sur des entrées d'un mélangeur 43. La sortie S₄₃ du mélangeur 43 délivre donc, lorsque les deux fréquences f'₁ et f'₂ sont envoyées sur les entrées E₄₀ et E₄₁, un signal comprenant deux fois le flux de données Tx centré sur des fréquences f₁ et f₂ différentes. Lorsqu'une seule fréquence f'₁ ou f'₂ est sélectionnée au moyen du signal CHS, par exemple, lorsque la communication est établie, la sortie S₄₃ délivre le flux de données Tx centré sur la fréquence f₁, respectivement f₂.

Le signal délivré par le mélangeur 43 traverse un filtre passe-bas 44 chargé d'éliminer le bruit haute-fréquence éventuel. La fréquence de coupure du filtre 44 est choisie pour être supérieure à la fréquence maximale des fréquences f₁ et f_{2,} majorée de l'écart ΔF de la modulation FSK. La sortie du filtre 44 constitue le signal TAI.

La constitution du dispositif de surmodulation 10' exposée ci-dessus se transpose à celle d'un dispositif 10 selon le premier mode de réalisation du circuit d'affectation 1 exposé en relation avec la figure 1. Il suffit de supprimer le circuit de commutation 43 et d'envoyer les fréquences f'₁ et f'₂, délivrées par le dispositif 11, directement sur les entrées E₄₀ et E₄₁ des multiplieurs 40 et 41.

Si le signal Tx est un signal en modulation ASK ou un flux de données binaires, la constitution du dispositif 10' ou 10 est identique.

La figure 6 représente un mode de réalisation d'un dispositif de démodulation 12 chargé de reconstituer un flux de données reçues Rx centré sur la fréquence centrale f_{c} du démodulateur FSK 8 (figure 1 ou 2) du circuit 1 ou 1'.

Le signal RAI traverse un premier filtre passe-bande 50, de préférence, centré sur la fréquence fᵢ correspondant au canal sélectionné par le dispositif 11 et ayant une bande passante correspondant à l'écart de fréquence Δf de la modulation FSK. La commande du filtre 50 par le dispositif 11 n'a pas été représentée aux figures.

La sortie S₅₀ du filtre 50 est envoyée sur une première entrée d'un multiplieur 51 dont une seconde entrée reçoit la fréquence f'ᵢ délivrée par le dispositif 11 ou 11'. Le multiplieur 51 se comporte donc comme un démodulateur du signal transmis avec une fréquence centrale fᵢ. Ainsi, en sortie du multiplieur 51, le spectre fréquentiel comprend les fréquences fₐ et f_{b}, ou f_{c}-Δf et f_{c}+Δf, de la modulation FSK.

En variante, le filtre 50 présente une bande passante contenant toutes les fréquences susceptibles d'êtres transmises par les différents canaux. En d'autres termes, sa bande passante est alors comprise entre la plus petite des fréquences fᵢ, diminuée de la moitié de l'écart de fréquence Δf de la modulation FSK, et la plus grande des fréquences fᵢ, majorée de la moitié de l'écart Δf. Le spectre fréquentiel en sortie du multiplieur comprend, dans ce cas, les fréquences fᵢ-Δf et fᵢ+Δf de tous les canaux présents dans le signal RAI à l'exception des fréquences associées au canal démodulé par la fréquence f'ᵢ. Les fréquences de ce canal sont redevenues les fréquences fₐ et f_{b}, ou f_{c}-Δf et f_{c}+Δf, de la modulation FSK.

Le signal S₅₁ délivré par le multiplieur 51 traverse un filtre passe-bande 52 dont la bande passante correspond aux fréquences fₐ et f_{b} de la modulation FSK. Le filtre 52 élimine donc tous les flux de données qui sont restés centrés sur des fréquences fᵢ. La sortie du filtre 52 constitue le signal Rx envoyé vers le démodulateur FSK 8.

Comme pour le dispositif 11 ou 11', le dispositif 12 décrit ci-dessus fonctionne, sans modification, si le signal Tx est en modulation ASK, pourvu que la fréquence de sa porteuse soit comprise entre les fréquences fₐ et f_{b} pour lesquelles le circuit 1 ou 1' a été dimensionné.

En variante, le filtre 52 est un filtre passe-bas dont la fréquence de coupure correspond à la fréquence maximale f_{b} de la modulation FSK ou de la fréquence de la modulation ASK.

Les fréquences fₐ et f_{b} de la modulation FSK proprement dites sont, de préférence, comprises entre 200 Hz et 10 kHz. Un tel choix permet d'optimiser le fonctionnement du démodulateur FSK. De plus, cela facilite la réalisation d'un filtre passe bande d'ordre élevé dans le dispositif 12 dans la mesure où la fréquence centrale f_{c} est alors relativement basse.

Les fréquences f₁ et f₂ sont choisies pour être importantes (par exemple entre environ 80 et 150 kHz) devant la fréquence de distribution de l'électricité (50 ou 60 Hz).

A titre d'exemple particulier de réalisation, un circuit d'affectation 1 ou 1' selon l'invention peut être réalisé avec des valeurs de fréquence indiquées ci-dessous.

Les fréquences fₐ et f_{b} des modulateur et démodulateur FSK sont, par exemple, respectivement de 4,8 kHz et 6 kHz. L'écart de fréquence Δf est donc de 1,2 kHz et la fréquence centrale f_{c} est de 5,4 kHz.

Les fréquences de coupure du filtre passe-bande 52 du dispositif de démodulation 12 sont, dans ce cas, de 4,8 kHz et 6 kHz, le filtre étant symétrique.

On choisit, par exemple, trois fréquences f'₁, f'₂ et f'₃ générées par le dispositif de sélection 11 ou 11'. Ces fréquences sont par exemple, respectivement de 99 kHz, 110 kHz et 132 kHz. La fréquence fₑ de la PLL 30 est, par exemple, de 3,960 MHz et correspond donc, respectivement, à un multiple de 40, 36 et 30 des fréquences f'₁, f'₂ et f'₃.

Les fréquences centrales obtenues pour les différents canaux correspondent à la somme de la fréquence f'₁, f'₂ ou f'₃ correspondant au canal et de la fréquence centrale f_{c} de la modulation FSK proprement dite. On obtient donc trois canaux possédant, respectivement, des fréquences centrales f₁, f₂ et f₃ de 104,4 kHz, 115,4 kHz et 137,4 kHz.

Ces canaux respectent bien la condition relative au non chevauchement des signaux modulés qu'ils transmettent. En effet, les données se trouvent transmises sous la forme d'échantillons de portion de fréquences de 103,8 et 105 kHz pour le premier canal, de 114, 8 et 116 kHz pour le deuxième canal et de 136,8 et 138 kHz pour le troisième canal.

Les filtres passe-bande des intégrateurs du dispositif de sélection 11 ou 11' présentent une largeur de bande passante de 1,2 kHz et sont centrés, respectivement sur les fréquences de 104,4 kHz, 115,4 kHz et 137,4 kHz. La fréquence de coupure du filtre passe-bas 44 du dispositif de modulation 10 ou 10' est, par exemple, de 140 kHz.

Selon un troisième mode de réalisation non représenté, le dispositif de modulation 10 (figure 1) ou 10' (figure 2) et le modulateur FSK 5 peuvent être remplacés par des modulateurs FSK numériques d'un même flux de données TxD, directement sur au moins deux fréquences centrales fᵢ différentes. Dans ce cas, le dispositif de sélection 11 ou 11' n'a pas besoin de générer de fréquences élevées f'ᵢ. Les sorties numériques des modulateurs FSK sont, chacune converties en un signal analogique. Ces signaux analogiques traversent un commutateur commandé par des signaux que délivre alors le circuit de sélection à la place des fréquences f'ᵢ.

Un avantage de la présente invention est qu'elle permet d'optimiser le fonctionnement de modems utilisant le réseau électrique comme support de transmission en autorisant l'emploi de différentes fréquences centrales fᵢ du flux de données modulées en FSK.

Un autre avantage de la présente invention est qu'elle ne nécessite aucune modification de la structure des modulateurs et démodulateurs FSK. Le circuit selon l'invention peut donc être implanté dans une installation existante, en particulier lorsqu'il est réalisé selon le premier mode de réalisation représenté à la figure 1 où il ne nécessite aucune connexion avec les processeurs des modems. On place un circuit d'affectation 1 entre chaque modem et le réseau électrique.

Un autre avantage de la présente invention est que des circuits d'affectation, qu'ils soient réalisés selon le premier ou le deuxième mode de réalisation, comportant des nombres de canaux différents sont parfaitement compatibles entre eux. En effet, il suffit que deux circuits d'affectation possèdent au moins une fréquence f'ᵢ commune pour qu'ils permettent une communication entre les deux modems auxquels ils sont respectivement associés.

Un autre avantage de la présente invention est qu'elle permet d'utiliser un même réseau et un même modem pour transmettre des messages sur des canaux différents.

On peut également prévoir que le circuit d'affectation 1 ou 1' selon l'invention soit rendu programmable par l'utilisateur. En effet, il suffit de rendre programmables le diviseur 31 et les filtres des intégrateurs 33 et 34 du dispositif 11 ou 11' pour que l'utilisateur puisse choisir les fréquences des canaux. Si les autres filtres du circuit 1 ne sont pas eux aussi programmables, la plage de fréquences utilisable est cependant limitée par la fréquence de coupure du filtre passe-bas 44 du dispositif 10 ou 10'.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, l'invention s'applique que la modulation utilisée soit une modulation FSK ou ASK et quel que soit le type de données binaires et la structure du message à transmettre.

En outre, alors que certaines des explications précédentes ont été données par souci de clarté en utilisant un vocabulaire qui correspond parfois à un fonctionnement analogique, il sera clair pour l'homme du métier que tous les éléments du circuit d'affectation selon la présente invention qui peuvent traiter des signaux numériques pourront correspondre, en pratique, à des réalisations logicielles.

## Revendications

1. Circuit (1 ; 1') d'affectation d'un canal à une transmission entre au moins deux modems utilisant le réseau électrique comme support de transmission d'un flux de données binaires (TxD), caractérisé en ce qu'il comporte, côté réception, un dispositif (11 ; 11') de sélection d'un canal choisi pour son meilleur niveau de transmission en fonction de l'énergie reçue sur plusieurs canaux de transmission, la transmission s'effectuant, au moins au début de chaque communication, sur plusieurs canaux.

2. Circuit selon la revendication 1, caractérisé en ce qu'il comporte, côté émission, un dispositif (10 ; 10') destiné à moduler un signal à émettre (Tx) sur au moins une fréquence (f'ᵢ) choisie parmi plusieurs fréquences élevées (f'₁, f'₂) définissant les canaux de transmission.

3. Circuit selon la revendication 2, caractérisé en ce que ledit dispositif de sélection (11 ; 11') délivre un signal de configuration d'un dispositif (12) de démodulation d'un signal reçu (RAI) sur ledit canal choisi.

4. Circuit selon la revendication 3, caractérisé en ce que ledit dispositif de sélection (11 ; 11') délivre toutes lesdites fréquences de modulation (f'₁, f'₂) audit dispositif de modulation (10 ; 10') tandis qu'il délivre une seule de ces fréquences (f'ᵢ), associée au canal sélectionné pour la communication, audit dispositif de démodulation (12), cette fréquence unique (f'ᵢ) constituant ledit signal de configuration du dispositif de démodulation (12).

5. Circuit selon la revendication 4, caractérisé en ce que ledit dispositif de modulation (10 ; 10') comporte au moins deux multiplieurs (40, 41) du flux de données (Tx) par chacune desdites fréquences élevées (f'₁, f'₂) délivrées par ledit dispositif de sélection (11 ; 11') et un mélangeur (43) des signaux de sorties (S₄₀, S₄₁) desdits multiplieurs (40, 41).

6. Circuit selon la revendication 4 ou 5, caractérisé en ce que ledit dispositif de démodulation (12) comporte un multiplieur (51) recevant, en entrées, un signal (S₅₀) sortant du réseau après filtrage et ladite fréquence élevée (f'ᵢ) associée au canal sélectionné et délivrée par ledit dispositif de sélection (11 ; 11').

7. Circuit selon l'une quelconque des revendications 2 à 6, caractérisé en ce que ledit dispositif de modulation (10 ; 10') est associé à un commutateur (42) recevant, en entrées, les différentes fréquences de modulation (f'₁, f'₂), ledit commutateur (42) étant commandé en fonction du canal sélectionné par ledit dispositif de sélection (11 ; 11').

8. Circuit selon l'une quelconque des revendications 2 à 7, caractérisé en ce que ledit dispositif de sélection (11 ; 11') délivre, en outre, un signal (CHI) indicateur du canal sélectionné à un processeur (15) de commande du modem, ledit processeur (15) envoyant au circuit d'affectation (1 ; 1'), un signal de commande (CHS) permettant de forcer les fréquences de modulation et de démodulation (f'ᵢ).

9. Circuit selon la revendication 8, caractérisé en ce que la sélection du canal de transmission s'effectue, côté réception, durant une trame (20) d'établissement d'une communication envoyée, sur tous les canaux, par un modem émetteur.

10. Circuit selon l'une quelconque des revendications 2 à 9, caractérisé en ce que ledit signal à émettre est un flux de données binaires (TxD) converti en un signal modulé (Tx) sous la forme d'échantillons de portions de deux fréquences (fₐ, f_{b}) centrées sur une fréquence centrale initiale (f_{c}) par un modulateur par saut de fréquence (5), la modulation effectuée par ledit dispositif de modulation (10 ; 10') consistant en un décalage de ladite fréquence centrale initiale (f_{c}) vers au moins une fréquence (fᵢ) plus élevée en respectant l'écart (Δf) entre les deux fréquences (fₐ, f_{b}) de la modulation FSK.

11. Circuit selon les revendications 6 et 10, caractérisé en ce que la sortie (S₅₁) dudit multiplieur (51) du dispositif de démodulation (12) est envoyée sur un filtre passe-bande (52) dont la largeur de bande correspond audit écart (Δf) entre les fréquences (fₐ, f_{b}) de la modulation FSK et qui est centré sur ladite fréquence initiale (f_{c}), la sortie (Tx) dudit filtre passe-bande (52) étant envoyée sur un démodulateur FSK (8) chargé de restituer un flux de données binaires (RxD).

12. Circuit selon l'une quelconque des revendications 2 à 11, caractérisé en ce que ledit signal à émettre est un flux de données binaires (TxD) converti en un signal modulé (Tx) sous la forme d'échantillons de portions d'une fréquence (f_{c}) par un modulateur par saut d'amplitude (ASK), la modulation effectuée par ledit dispositif de modulation (10 ; 10') consistant en un décalage de ladite fréquence (f_{c}) dudit modulateur ASK vers au moins une fréquence (fᵢ) plus élevée.
